# EUROPEAN PATENT SPECIFICATION

(11) **EP 1 403 636 B1**
(45) Date of publication and mention of the grant of the patent: **23.07.2008**
(21) Application number: 03021676.6
(22) Date of filing: 29.09.2003
(51) Int. Cl.: G01N 31/12, G01N 30/12

(54) **Sample heating apparatus**
Probenheizvorrichtung
Dispositif de chauffage des échantillons

(30) Priority: 30.09.2002 JP 2002285401
(43) Date of publication of application: 31.03.2004
(73) Proprietor: Dia Instruments Co. Ltd., Chigasaki-shi, Kanagawa 253-0084 (JP)
(72) Inventor: Hayashi, Norio, Chigasaki-shi Kanagawa-ken 253-0084 (JP)
(74) Representative: HOFFMANN EITLE

(56) References cited:
- GB-A- 2 029 014
- US-A- 5 328 663
- PATENT ABSTRACTS OF JAPAN vol. 2002, no. 09, 4 September 2002 (2002-09-04) & JP 2002 139480 A (DIA INSTR:KK), 17 May 2002 (2002-05-17)

## Description

### BACKGROUND OF THE INVENTION

The present invention relates to a sample heating apparatus, and more particularly, to a sample heating apparatus used in pretreatment of halogen analysis, which has a simplified structure and is capable of supplying a sufficient amount of water vapor.

Upon the analysis of halogens contained in a sample, the sample is heat-decomposed in the presence of water to absorb the halogens in a water medium in the form of hydrogen halide, and the halogen-absorbed water medium is subjected to ion chromatography, volumetric titration or absorptiometry to measure the halogen concentration in the sample. The method for heat-decomposing the sample varies depending upon kind of the sample used. In the case of organic samples, it is required to combustion-decompose the sample in the presence of oxygen. Whereas, in the case of inorganic samples, the combustion-decomposition of the sample is not required, and rather the sample can be sufficiently treated by thermal hydrolysis.

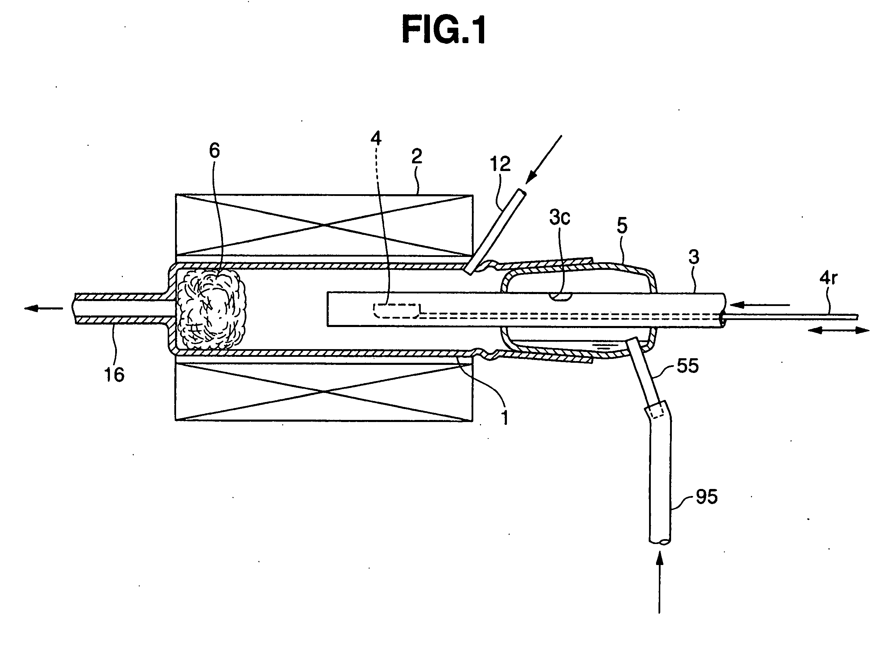

Upon the heat-decomposition of the sample, there has been used a sample heating apparatus for pretreatment of the halogen analysis, which includes a reaction tube which is heatable by a heater from an outer peripheral side thereof, and a sample-supplying boat which is inserted into the reaction tube from a base end thereof. As the heating apparatus used for combustion-decomposition of the organic samples, there is known a sample combustion apparatus in which a sample supported on the boat within the reaction tube is heated by a heating means while supplying oxygen into the reaction tube (Japanese Patent Application No. 8-262000(1996)). Also, as the heating apparatus for hydrolysis of the inorganic samples, there is known a thermal hydrolysis apparatus of such a type in which water vapor generated by heating water received in a flask is entrained on a carrier gas and fed into the reaction tube (JIS K2541-1996, Fig. 12 "Testing Device of Combustion Tube Type Using Oxygen Method"; and JIS H1698-1976, Attached Figs. 1-1 and 1-2 "Thermal Hydrolysis Apparatus".

In order to enhance an accuracy of the halogen analysis, it is important to increase a recovery percentage of hydrogen halide absorbed in an absorbing solution after decomposition of the sample as highly as possible. Thus, in both the cases of the hydrolysis of the inorganic samples and the combustion-decomposition of the organic samples, it is effective to supply a sufficient amount of water vapor to the reaction tube.

However, in the conventional apparatuses of a water-introducing type such as the above thermal hydrolysis apparatus, it is required to provide a heating means for generating the water vapor as well as a flow passage for supplying the generated water vapor from the flask as a water vapor generating means to the reaction tube, resulting in complicated structure thereof. Further, in order to introduce a sufficient amount of water vapor into the reaction tube without condensation thereof, it is necessary to sufficiently heat-insulating the flow passage to prevent condensation of the water vapor therein. However, it will be actually difficult to keep all of conduits and connecting portions of the apparatus at a temperature of not less than 100°C. In addition, in the apparatus of the above type, the amount of water vapor generated is limited to an approximately constant level. Therefore, when samples having a high halogen concentration are to be treated by the apparatus, there tends to arise such a problem that a sufficient amount of the water vapor cannot be supplied thereto.

### SUMMARY OF THE INVENTION

In view of the above problems, an object of the present invention is to provide a sample heating apparatus used in pretreatment of halogen analysis, which has a simplified structure and is capable of supplying a sufficient amount of water vapor without condensation thereof.

According to the present invention, a heating means having an inherent function for heating a sample is usefully used to generate water vapor in close proximity to a reaction tube by heat inertia thereof and immediately introduce the thus generated water vapor into a sample heating zone within the reaction tube. With this arrangement, the apparatus of the present invention has a simplified structure and is capable of supplying a sufficient amount of water vapor into the reaction tube without condensation thereof.

The present invention includes a first embodiment using no oxygen upon heating, and a second embodiment using oxygen. In the first embodiment of the present invention, there is provided a sample heating apparatus used in pretreatment of halogen analysis, in which the sample is heat-decomposed in the presence of water to absorb halogens contained in the sample into a water medium in the form of hydrogen halide, the said sample heating apparatus comprising a reaction tube which is capable of being heated by a heating means from an outer peripheral side thereof; a sample-supplying boat bing insertable into the reaction tube from a base end thereof; and a water vapor generator of a jacket structure disposed on an outer periphery of the reaction tube which is capable of being supplied with water and generating water vapor by heat inertia of the heating means, wherein said reaction tube is provided on its wall portion surrounded by the water vapor generator, with a hole adapted for introducing the water vapor generated in the water vapor generator into the reaction tube.

In addition, in the second embodiment of the present invention, there is provided a sample heating apparatus used in pretreatment of halogen analysis, in which a sample is heat-decomposed in the presence of water to absorb halogens contained in the sample into a water medium in the form of hydrogen halide, the said sample heating apparatus comprising an outer tube which is capable of being supplied with oxygen and being heated by a heating means from an outer peripheral side thereof; an inner tube which is capable of being supplied with a carrier gas, and is inserted into the outer tube from a base end thereof; a sample-supplying boat being insertable into the inner tube from a base end thereof; and a water vapor generator of a jacket structure disposed on an outer periphery of the inner tube at a position approximately corresponding to a base end portion of the outer tube which is capable of being supplied with water and generating water vapor by heat inertia of the heating means, wherein said inner tube is provided on its wall portion surrounded by the water vapor generator, with a hole adapted for introducing the water vapor generated in the water vapor generator into the inner tube.

### BRIEF DESCRIPTION OF THE DRAWINGS

Fig. 1 is a side view, partially broken away, of essential parts of an example of a sample heating apparatus according to the present invention.
Fig. 2 is a side view of a whole structure of the sample heating apparatus which is partially illustrated by a flow diagram.

### PREFERRED EMBODIMENTS OF THE INVENTION

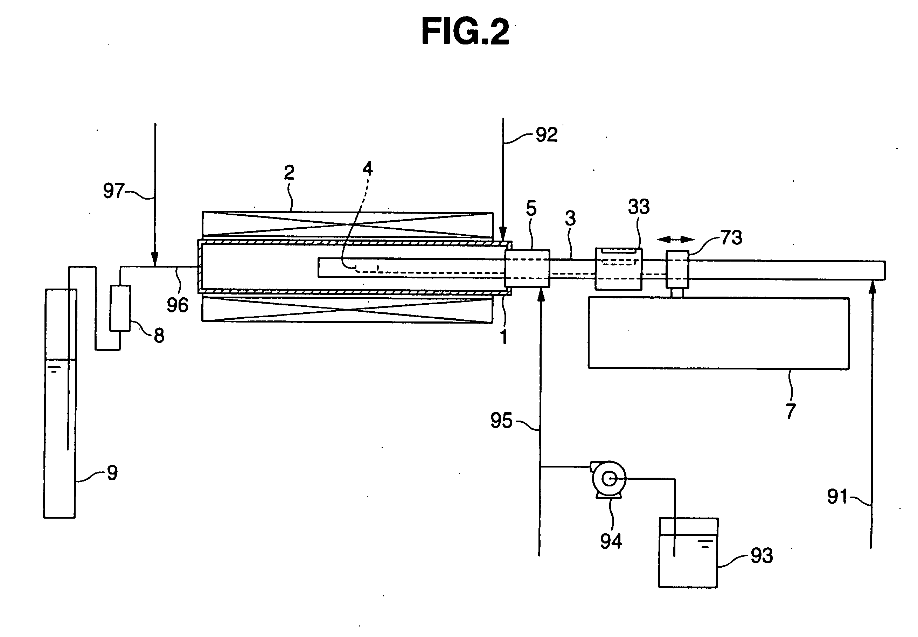

The sample heating apparatus according to the present invention is explained with reference to the accompanying drawings. Fig. 1 shows a side view, partially broken away, of essential parts of an example of a sample heating apparatus according to the present invention. Fig. 2 shows a side view of a whole structure of the sample heating apparatus which is partially illustrated by a flow diagram.

The sample heating apparatus of the present invention is used in pretreatment of halogen analysis, in which a sample is heat-decomposed in the presence of water to absorb halogens contained in the sample, such as fluorine, chlorine, bromine and iodine into a water medium (hereinafter properly referred to as "absorbing solution") in the form of hydrogen halide. The sample heating apparatus of the present invention is applied to analysis of various organic and inorganic samples such as medicines, agricultural chemicals, organic synthetic products, petroleum-based products and resins. The present invention is exemplified by two embodiments, i.e., the first embodiment applied to the case where the sample is hydrolyzed without supply of oxygen, and the second embodiment applied to the case where the sample is combustion-decomposed while supplying oxygen thereto.

The sample heating apparatus according to the first embodiment of the present invention includes a reaction tube capable of being heated by a heating means from an outer peripheral side thereof, and a sample-supplying boat being insertable into the reaction tube from a base end thereof, and further includes a water vapor generator of a jacket structure disposed on an outer periphery of the reaction tube which is capable of generating water vapor by heat inertia of the heating means, the reaction tube being provided on its wall portion surrounded by the water vapor generator, with a hole adapted for introducing the water vapor generated in the water vapor generator into the reaction tube. The above sample heating apparatus according to the first embodiment of the present invention has substantially the same structure as that according to the below-mentioned second embodiment of the present invention except that the reaction tube of the first embodiment is constituted by merely one tube corresponding to the inner tube of the second embodiment. In the following descriptions, the present invention is described in detail with respect to the second embodiment.

As shown in Fig. 1, the sample heating apparatus according to the second embodiment of the present invention includes an outer tube (1) which is capable of being supplied with oxygen and being heated by a heating means (2) from an outer peripheral side thereof, an inner tube (3) which is capable of being supplied with a carrier gas and is inserted into the outer tube from a base end thereof, and a sample-supplying boat (4) which is inserted into the inner tube from a base end thereof. Namely, in the sample heating apparatus shown in Fig. 1, the reaction tube is constituted by the outer tube (1) and the inner tube (3). Usually, all of the outer tube (1), the inner tube (3) and the boat (4) as well as the below-mentioned oxygen feed port (12), sample gas exhaust port (16), water vapor generator (5) and water feed port (55) may be made of quartz.

The outer tube (1) is an elongated tube for forming an oxygen atmosphere therein. The outer tube (1) has a base end portion (right side end portion as viewed in figures) opened with a so-called flare shape which is gradually increased in its diameter towards a distal end thereof, such that the water vapor generator (5) can be fitted thereto. The outer tube (1) has an inner diameter of about 25 to 35 mm and a length of about 200 to 400 mm.

The outer tube (1) is provided with an oxygen feed port (12) of a capillary shape for supplying oxygen into the outer tube (1) at the boundary between the flared base end portion and a straight tube portion. The oxygen feed port (12) is connected with a flow passage (92) (refer to Fig. 2) extending from an oxygen container. The flow amount of oxygen supplied through the flow passage (92) is controlled by a flow rate controller (not shown). Also, the outer tube (1) is provided at its tip end with a sample gas exhaust port (16) of a capillary shape for discharging a combustion gas generated in the outer tube therefrom. The sample gas exhaust port (16) is connected with a flow passage (96) extending up to an absorption tube (9) (refer to Fig. 2). The tip end portion of the outer tube (1) is filled with quartz cotton (6).

The heating means (2) may be usually constituted by an electric furnace (cylindrical heater) in order to sufficiently heat the sample for a short period of time. More specifically, the sample heating apparatus has such a structure that the outer tube (1) is inserted into a cylindrical electric furnace. The electric furnace usable in the present invention may have an output power of about 0.7 to 5 kW. Meanwhile, it is not necessarily required to cover a whole length of the outer tube (1) with the heating means (2). As shown in Fig. 1, sufficient heating will be possible if merely the straight tube portion of the outer tube except for its flared base end portion is covered by the heating means.

The inner tube (3) is an elongated tube for introducing the gas produced by heat-decomposition of the sample into the outer tube (1). The opened tip end (left side end as viewed in figures) of the inner tube (3) is inserted into the outer tube until reaching an approximately mid position of length of the outer tube for promoting combustion of the gas produced. The inner tube (3) has an inner diameter of about 10 to 20 mm and a length of about 200 to 300 mm.

The portion of the inner tube (3) which is not inserted into the outer tube (1) is exposed outside from the outer tube (1) as shown in Fig. 2. The base end portion of the inner tube (3) is connected with the flow passage (91) extending from a carrier gas container for supplying the carrier gas into the inner tube (3) through the flow passage (91). The flow amount of the carrier gas supplied through the flow passage (91) is controlled by a flow rate controller (not shown). Also, the inner tube (3) is provided at its approximately mid position with a sample feed port (33). The sample feed port (33) has such a structure including an opening formed at a portion of the inner tube (3) and a casing with a lid which covers an outer periphery of the portion of the inner tube (3).

The carrier gas supplied into the inner tube (3) serves not only for introducing the decomposed gas generated from the sample into the outer tube (1), but also for smoothly discharging the combustion gas through the sample gas exhaust port (16) (refer to Fig. 1) to the absorption tube (9). As the carrier gas, there may be used gases that are inert to the reaction, for example, rare gases such as argon.

The sample-supplying boat (4) may be in the form of a small dish which is reciprocally movable within the inner tube (3) between the sample feed port (33) and the position near the tip end of the inner tube (3) while supporting the sample thereon. The sample-supplying boat (4) may have, for example, a shallow flat elongated box shape. As shown in Fig. 1, the boat (4) is fitted to the tip end of an operating rod (4r), and as shown in Fig. 2, the boat (4) is reciprocally moved by actuating the operating rod (4r) by a boat controller (7).

More specifically, the base end of the operating rod (4r) is connected to a short cylindrical metal piece loosely fitted to an inner periphery of the inner tube (3). On an outer periphery of the inner tube (3), there is disposed a movable member (73) which is constituted from a ring-shaped magnet or electromagnet loosely engaged on the outer periphery of the inner tube (3) and linearly moved by a driving mechanism of a boat controller (7), for example, such a driving mechanism constituted by servo motor, rack mechanism, etc. Thus, the operating rod (4r) is moved within the inner tube (3) while following the movement of the movable member (73).

In the present invention, in order to supply a sufficient amount of water vapor into the inner tube (3), as shown in Fig. 1, a water vapor generator (5) of a jacket structure, which is capable of being supplied with water and generating water vapor by heat inertia of the heating means (2) is disposed on an outer periphery of the inner tube (3) at a position approximately corresponding to the base end portion of the outer tube (1). Further, the inner tube (3) is provided at its wall portion surrounded by the water vapor generator (5), with a hole (3c) for introducing the water vapor generated, into the inner tube (3).

The water vapor generator (5) is in the form of a casing member having a barrel outer shape which surrounds the outer periphery of the inner tube (3), and has such a function of storing water and generating water vapor therein. A substantial front half of the water vapor generator (5) (left half as viewed in figures) has a tapered outer peripheral surface that is gradually reduced in its diameter towards the tip end of the inner tube (3). With this structure, when the inner tube (3) with the water vapor generator (5) is inserted into the outer tube (1) from the base end portion thereof, the tapered outer peripheral surface of the water vapor generator (5) comes into close engagement with the flared based end portion of the outer tube (1). More specifically, the inner tube (3) equipped with the water vapor generator (5) is detachably mounted to the outer tube (1) by fitting the water vapor generator (5) into the base end portion of the outer tube (1). This detachable structure of the apparatus allows the quartz cotton (6) to be readily removed from the outer tube, and further facilitates maintenance and control of the apparatus such as cleaning.

The water vapor generator (5) is provided, for example, on a rear end side thereof (right side as viewed in figures) with a capillary-shaped water feed port (55) which is connected with a flow passage (95) for supplying water entrained on the carrier gas such as argon into the water vapor generator (5). As shown in Fig. 2, the flow passage (95) extends from a carrier gas supply source (carrier gas container) and is capable of introducing water sucked up from a water container (93) into the water vapor generator by a constant delivery pump (94). Meanwhile, the flow amount of the carrier gas supplied through the flow passage (91) is controlled by a flow rate controller (not shown). In addition, in order to generate a sufficient amount of water vapor, an inside volume of the water vapor generator (5) is usually about 5 to 30 cm³.

As shown in Fig. 1, the hole (3c) is usually formed on an upper surface of the horizontally disposed inner tube (3) so as to prevent water received within the water vapor generator (5) from directly entering into the inner tube (3). The hole (3c) has a diameter of usually about 1 to 8 mm. Since the hole (3c) formed on the inner tube (3) is disposed within the water vapor generator (5), it is possible to immediately introduce the generated water vapor into the reaction zone. Meanwhile, the position approximately corresponding to the base end portion of the outer tube (1), where the water vapor generator (5) is arranged, includes such a region capable of evaporating a sufficient amount of water received in the water vapor generator (5) by heat inertia of the heating means (2).

Also, in the sample heating apparatus of the present invention, as shown in Fig. 2, the outer tube (1) is connected at its tip end to an absorption tube (9) containing an absorbing solution through a flow passage (96) in order to promote combustion (decomposition) of the sample and capture hydrogen halide contained in the combustion gas (decomposed gas). The flow passage (96) disposed between the outer tube (1) and the absorption tube (9) is filled with an anticorrosive filler for condensing the water vapor.

More specifically, a trap column (8) is,interposed in the flow passage (96), and the filler is filled in the trap column (8). Examples of the above filler may include polymer particles, ceramic particles, glass particles or fibers made of these materials. Further, membrane filters and the like may be used instead of these particles or fibers. The trap column (8) has an inside volume of usually about 0.5 to 3 cm³. Further, the flow passage (96) is connected at its upstream side with a flow passage (97) through which a cleaning solution having the same composition as that of the absorbing solution is introduced, in order to collect the water condensed in the trap column (8) on the side of the absorption tube (9). When the sample gas exhaust port (16) is closed, the cleaning solution can be introduced from the flow passage (97) into the trap column (8).

Upon the treatment using the sample heating apparatus of the present invention, the boat (4) held at a stand-by position just below the sample feed port (33) is first supplied with the sample, and then moved towards the tip end of the inner tube (3) by the boat controller (7). Next, argon as the carrier gas is supplied at a constant flow rate into the inner tube (3), and oxygen used for combustion of the sample is supplied at a constant flow rate into the outer tube (1). In addition, the outer tube (1) and the inner tube (3) are heated to a predetermined temperature by the heating means (2). Then, the carrier gas containing water is supplied at a constant flow rate through the flow passage (95) into the water vapor generator (5).

The flow rates of the above gaseous components supplied may vary depending upon kind and amount of the sample to be treated. For example, when 50 µl of a toluene solution containing dinitrobenzene is treated as the sample, argon is supplied at a flow rate of 150 ml/min through the flow passage (91) into the inner tube (3) by appropriately setting the flow rate controller, and oxygen is supplied at a flow rate of 500 ml/min through the flow passage (92) into the outer tube (1). In addition, while supplying argon at a flow rate of 200 ml/min through the flow passage (95) into the water vapor generator (5), water entrained on the argon is also supplied at a flow rate of 0.2 ml/min into the water vapor generator (5) by appropriately controlling the constant delivery pump (94). Also, the temperature of the heating furnace as the heating means (2) is set to the range of 900 to 1,000°C.

In the sample heating apparatus of the present invention, the sample inserted into the inner tube (3)is heat-decomposed therewithin, and the resultant decomposed gas is discharged by the carrier gas from the inner tube (3) into the outer tube (1). At this time, the water vapor produced in the water vapor generator (5) is introduced into the inner tube (3) and discharged together with the decomposed gas into the outer tube (1). More specifically, the water vapor generator (5) has such a function for temporarily storing water supplied, generating water vapor by heat inertia of the heating means (2), and allowing the water vapor generated therein to enter into the inner tube (3) through the hole (3c) formed on the wall of the inner tube (3). As a result, the gases produced by heat-decomposition of the sample are combusted in the presence of the water vapor within the outer tube (1).

The combustion gas generated in the outer tube (1) is discharged therefrom, and then passed through the flow passage (96) and the trap column (8). At this time, the hydrogen halide-containing water contained in the combustion gas is captured by the filler filled in the trap column (8). Further, the combustion gas passed through the trap column (8) is introduced into the absorption tube (9) to absorb hydrogen halide in the absorbing solution stored therein. The water captured in the trap column (8) is collected and passed into the absorption tube (9) by the cleaning procedure using the cleaning solution. The resultant absorbing solution is analyzed by a suitable analyzer. In the case of the above treatment, as the absorbing solution, there may be used, for example, a solution prepared by adding 30 ppm of hydrogen peroxide and 0.5 ppm of phosphoric acid to an eluent for ion chromatography.

As describe above, in the sample heating apparatus of the present invention, water vapor is generated in the water vapor generator (5) in close proximity to the inner tube (3) (reaction tube) by heat inertia of the heating means (2), and then immediately introduced into the sample heating zone within the inner tube (3) (reaction tube) through the hole (3c) of the inner tube (3) (reaction tube). Therefore, the sample heating apparatus of the present invention is simplified in structure as compared to the conventional apparatuses in which water vapor separately generated is introduced thereinto through conduits. In addition, since the water vapor generated is immediately introduced into the sample heating zone within the inner tube (3) (reaction tube), a sufficient amount of water vapor can be supplied without condensation thereof. Further, the sample heating apparatus of the present invention requires no separate heating means for generation of water vapor unlike conventional ones, resulting in further reduction in production costs therefor.

Furthermore, in the conventional apparatuses, a plurality of absorption tubes are connected in series with each other, and absorbing solutions of the respective absorption tubes are collected in a common position, resulting in complicated structure and difficult automation thereof as well as large analysis errors due to poor procedure for collection of the absorbing solutions. On the other hand, in the present invention, since the trap column (8) is disposed on a front side of the absorption tube (9), it is possible to finally collect and absorb hydrogen halide contained in the combustion gas (decomposed gas) in the absorbing solution stored in the absorption tube (9) in an extremely simplified manner. More specifically, in the present invention, since an inside of the apparatus is always kept under a wet condition by the condensed water and the hydrogen halide is passed through the filler having a small porosity, the contact efficiency can be kept high, thereby further ensuring recovery of the hydrogen halide.

Meanwhile, the sample heating apparatus of the present invention can be applied to not only the pretreatment of halogen analysis, but also pretreatment of sulfur analysis. In addition, the apparatus of the present invention can also be applied to the pretreatment of simultaneous halogen and sulfur analysis by appropriately selecting a suitable absorbing solution.

As described above, in the sample heating apparatus according to the present invention, since water vapor is generated in the water vapor generator in close proximity to the reaction tube by heat inertia of the heating means, and then immediately introduced into the sample heating zone within the reaction tube through the hole formed on the reaction tube, it is possible to extremely simplify the structure thereof and supply a sufficient amount of water vapor without condensation thereof.

## Claims

1. A sample heating apparatus used in pretreatment of halogen analysis, in which a sample is heat-decomposed in the presence of water to absorb halogens contained in the sample into a water medium in the form of hydrogen halide, said apparatus comprising:
a reaction tube capable of being heated by a heating means (2) from an outer peripheral side thereof;
a sample-supplying boat (4) being insertable into the reaction tube from a base end thereof; and
a water vapor generator (5) of a jacket structure disposed on an outer periphery of the reaction tube, which is capable of being supplied with water and generating water vapor by heat inertia of the heating means;
said reaction tube being provided on its wall portion adapted surrounded by the water vapor generator, with a hole (3c) for introducing the water vapor generated in the water vapor generator into the reaction tube.

2. A sample heating apparatus according to claim 1, wherein the reaction tube is connected on its tip end side with an absorption tube (9) containing the water medium through a flow passage (96) disposed between the reaction tube and the absorption tube, and filled with a anticorrosive filler for condensing the water vapor.

3. A sample heating apparatus used in pretreatment of halogen analysis, in which a sample is heat-decomposed in the presence of water to absorb halogens contained in the sample into a water medium in the form of hydrogen halide, said apparatus comprising:
an outer tube (1) capable of being supplied with oxygen and being heated by a heating means (2) from an outer peripheral side thereof;
an inner tube (3) capable of being supplied with a carrier gas which is inserted into the outer tube from a base end thereof;
a sample-supplying boat (4) being insertable into the inner tube from a base end thereof; and
a water vapor generator (5) of a jacket structure disposed on an outer periphery of the inner tube at a position approximately corresponding to a base end portion of the outer tube which is capable of being supplied with water and generating water vapor by heat inertia of the heating means;
said inner tube being provided on its wall portion adapted surrounded by the water vapor generator, with a hole (3c) or introducing the water vapor generated in the water vapor generator into the inner tube.

4. A sample heating apparatus according to claim 3, wherein the inner tube including the water vapor generator is detachably mounted to the outer tube by fitting the water vapor generator into the base end portion of the outer tube.

5. A sample heating apparatus according to claim 3 or 4, wherein the outer tube is connected at its tip end with an absorption tube (9) containing the water medium through a flow passage (96) disposed between the outer tube and the absorption tube, and filled with an anticorrosive filler for condensing the water vapor.

## Patentansprüche

1. Probenheizvorrichtung, die bei der Halogenanalyse-Vorbehandlung verwendet wird, bei welcher eine Probe durch Wärme in der Gegenwart von Wasser zersetzt wird, um Halogene, die in der Probe enthalten sind, in ein Wassermedium in der Form von Halogenwasserstoff zu absorbieren, wobei die Vorrichtung umfasst:
ein Reaktionsrohr, das imstande ist, durch eine Heizeinrichtung (2) von einer äußeren Randseite davon erwärmt zu werden;
ein Probenzufuhr-Schiffchen (4), das in das Reaktionsrohr von einem Basisende davon einführbar ist; und
einen Wasserdampferzeuger (5) mit einer Ummantelungsstruktur, der an einem Außenrand des Reaktionsrohrs angeordnet ist, welcher imstande ist, mit Wasser versorgt zu werden und Wasserdampf durch Wärmeträgheit der Heizeinrichtung zu erzeugen;
wobei das Reaktionsrohr an seinem Wandabschnitt, umgeben durch den Wasserdampferzeuger, mit einer Bohrung (3c) versehen ist, die zum Einführen des Wasserdampfes, der in dem Wasserdampferzeuger erzeugt wird, in das Reaktionsrohr geeignet ist.

2. Probenheizvorrichtung nach Anspruch 1, bei der das Reaktionsrohr an seiner Spitzenendseite mit einem Absorptionsrohr (9), welches das Wassermedium enthält, verbunden ist, durch einen Strömungsdurchgang (96), der zwischen dem Reaktionsrohr und dem Absorptionsrohr angeordnet ist, und mit einem korrosionshemmenden Füllmittel zum Kondensieren des Wasserdampfes gefüllt ist.

3. Probenheizvorrichtung, die bei der Halogenanalyse-Vorbehandlung verwendet wird, bei welcher eine Probe durch Wärme in der Gegenwart von Wasser zersetzt wird, um Halogene, die in der Probe enthalten sind, in ein Wassermedium in der Form von Halogenwasserstoff zu absorbieren, wobei die Vorrichtung umfasst:
ein äußeres Rohr (1), das imstande ist, mit Sauerstoff versorgt und durch eine Heizeinrichtung (2) von einer äußeren Randseite davon erwärmt zu werden;
ein inneres Rohr (3), das imstande ist, mit einem Trägergas versorgt zu werden, welches in das äußere Rohr von einem Basisende davon eingeführt ist;
ein Probenzufuhr-Schiffchen (4), das in das innere Rohr von einem Basisende davon einführbar ist; und
einen Wasserdampferzeuger (5) mit einer Ummantelungsstruktur, der an einem Außenrand des inneren Rohrs in einer Position angeordnet ist, die ungefähr einem Basisendabschnitt des äußeren Rohrs entspricht, welcher imstande ist, mit Wasser versorgt zu werden und Wasserdampf durch Wärmeträgheit der Heizeinrichtung zu erzeugen;
wobei das innere Rohr an seinem Wandabschnitt, umgeben durch den Wasserdampferzeuger, mit einer Bohrung (3c) versehen ist, die zum Einführen des Wasserdampfes, der in dem Wasserdampferzeuger erzeugt wird, in das innere Rohr geeignet ist.

4. Probenheizvorrichtung nach Anspruch 3, bei der das innere Rohr, das den Wasserdampferzeuger umfasst, an dem äußeren Rohr lösbar angebracht ist, durch Einpassen des Wasserdampferzeugers in den Basisendabschnitt des äußeren Rohrs.

5. Probenheizvorrichtung nach Anspruch 3 oder 4, bei der das äußere Rohr an seinem Spitzenende mit einem Absorptionsrohr (9), welches das Wassermedium enthält, verbunden ist, durch einen Strömungsdurchgang (96), der zwischen dem äußeren Rohr und dem Absorptionsrohr angeordnet ist, und mit einem korrosionshemmenden Füllmittel zum Kondensieren des Wasserdampfes gefüllt ist.

## Revendications

1. Dispositif de chauffage d'échantillons utilisé pour le prétraitement d'une analyse d'halogènes, dans lequel un échantillon est décomposé à chaud en présence d'eau pour absorber les halogènes contenus dans l'échantillon et donner un milieu aqueux sous forme d'halogénure d'hydrogène, ledit dispositif comprenant :
un tube de réaction apte à être chauffé par un moyen de chauffage (2) depuis son pourtour extérieur ;
une nacelle d'alimentation d'échantillons (4) apte à être insérée dans le tube de réaction depuis une extrémité de base de celui-ci ; et
un générateur de vapeur d'eau (5) à structure de gaine disposé sur un pourtour extérieur du tube de réaction, qui est apte à être alimenté en eau et générer de la vapeur d'eau par l'inertie thermique du moyen de chauffage ;
ledit tube de réaction étant pourvu sur sa partie de paroi entourée par le générateur de vapeur d'eau, d'un trou (3c) prévu pour introduire la vapeur d'eau générée par le générateur de vapeur d'eau dans le tube de réaction.

2. Dispositif de chauffage d'échantillons selon la revendication 1, dans lequel le tube de réaction est relié par son embout à un tube d'absorption (9) contenant le milieu aqueux par un passage fluidique (96) disposé entre le tube de réaction et le tube d'absorption, et est rempli d'un filler anticorrosif destiné à condenser la vapeur d'eau.

3. Dispositif de chauffage d'échantillons utilisé pour le prétraitement d'une analyse d'halogènes, dans lequel un échantillon est décomposé à chaud en présence d'eau pour absorber les halogènes contenus dans l'échantillon et donner un milieu aqueux sous forme d'halogénure d'hydrogène, ledit dispositif comprenant :
un tube extérieur(1) apte à alimenté en oxygène et à être chauffé par un moyen de chauffage (2) depuis son pourtour extérieur ;
un tube intérieur (3) apte à être alimenté avec un gaz entraîneur inséré dans le tube extérieur depuis une extrémité de base de celui-ci ;
une nacelle d'alimentation d'échantillons (4) apte à être insérée dans le tube intérieur depuis une extrémité de base de celui-ci ; et
un générateur de vapeur d'eau (5) à structure de gaine disposé sur un pourtour extérieur du tube intérieur à une position qui correspond approximativement à une partie d'extrémité de base du tube extérieur, qui peut être alimenté en eau et générer de la vapeur d'eau par l'inertie thermique du moyen de chauffage ;
ledit tube intérieur étant pourvu sur sa partie de paroi entourée par le générateur de vapeur d'eau, d'un trou (3c) prévu pour introduire la vapeur d'eau générée par le générateur de vapeur d'eau dans le tube intérieur.

4. Dispositif de chauffage d'échantillons selon la revendication 3, dans lequel le tube intérieur incluant le générateur de vapeur d'eau est monté de manière amovible sur le tube extérieur en emboîtant le générateur de vapeur d'eau dans la partie d'extrémité de base du tube extérieur.

5. Dispositif de chauffage d'échantillons selon la revendication 3 ou 4, dans lequel le tube extérieur est relié au niveau de son embout à un tube d'absorption (9) contenant le milieu aqueux par un passage fluidique (96) disposé entre le tube extérieur et le tube d'absorption, et est rempli d'un filler anticorrosif destiné à condenser la vapeur d'eau.
